Europäisches Patentamt

European Patent Office

Office européen des brevets

(19)

(11) Numéro de publication : **0 434 525 B1**

## (12) FASCICULE DE BREVET EUROPEEN

(45) Date de publication du fascicule du brevet :
06.07.94 Bulletin 94/27

(51) Int. Cl.⁵ : **F16H 3/66, F16H 47/08**

(21) Numéro de dépôt : **90403600.1**

(22) Date de dépôt : **14.12.90**

(54) **Transmission automatique multivitesses pour véhicule automobile.**

(30) Priorité : **18.12.89 FR 8916689**

(43) Date de publication de la demande :
**26.06.91 Bulletin 91/26**

(45) Mention de la délivrance du brevet :
**06.07.94 Bulletin 94/27**

(84) Etats contractants désignés :
**DE GB IT SE**

(56) Documents cités :
**EP-A- 0 206 123**
**EP-A- 0 239 205**
**EP-A- 0 400 816**
**EP-A- 0 433 619**
**FR-A- 2 212 892**

(56) Documents cités :
**FR-A- 2 376 972**
**GB-A- 1 190 088**
**GB-A- 2 103 736**
**US-A- 3 577 804**
**Automobil-Industrie vol. 4, 1979, pages 41 - 49;**
**Jürgen Pickard:"Planetengetriebe in automa-**
**tischen Fahrzeuggetrieben"**

(73) Titulaire : **Lepelletier, Pierre André Georges**
**23 avenue Adrien Moisant**
**F-78400 Chatou (FR)**

(72) Inventeur : **Lepelletier, Pierre André Georges**
**23 avenue Adrien Moisant**
**F-78400 Chatou (FR)**

(74) Mandataire : **CABINET BONNET-THIRION**
**95 Boulevard Beaumarchais**
**F-75003 Paris (FR)**

## Description

La présente invention se situe dans le domaine des transmissions automatiques, notamment pour véhicules automobiles, constituées de trains planétaires contrôlés par des éléments de friction tels que des embrayages et des freins, et couramment associées à un organe de démarrage sujet à glissement, tel qu'un convertisseur de couple hydraulique ou un coupleur, muni ou non d'un embrayage de pontage.

On connait depuis longtemps de telles transmissions classiques à trois vitesses comportant un train planétaire double, quatre ou cinq éléments de friction, et un convertisseur de couple hydraulique. On connait également des transmissions complexes à quatre vitesses construites à partir de ces transmissions classiques à trois vitesses en leur ajoutant un train planétaire simple à deux rapports et deux éléments de friction, d'où des ensembles comportant au total un train planétaire double, un train planétaire simple, six ou sept éléments de friction, plus un convertisseur de couple et un embrayage de pontage.

Ces transmissions complexes à quatre vitesses sont toutefois d'un encombrement, d'un poids et d'un prix importants, limitant pratiquement leur emploi aux seuls véhicules de haut de gamme à moteur en long et propulsion arrière, et rendant celui-ci au contraire très difficile, voire impossible, sur les véhicules à traction avant et moteur en travers de plus en plus nombreux. Pour ces véhicules, on a alors créé directement des transmissions compactes à quatre vitesses, comportant seulement un train planétaire double et cinq ou six éléments de friction, plus un convertisseur de couple et éventuellement un embrayage de pontage.

Ces transmissions compactes à quatre vitesses tendent à remplacer aujourd'hui les anciennes transmissions classiques à trois vitesses, et on commence à proposer de nouvelles transmissions complexes à cinq et parfois six vitesses, construites à partir de ces transmissions compactes à quatre vitesses en leur ajoutant un train planétaire simple à deux rapports et deux éléments de friction, comme précédemment aux transmissions classiques à trois vitesses. On obtient ainsi de nouveaux ensembles comportant au total un train planétaire double, un train planétaire simple, sept ou huit éléments de friction, plus un convertisseur de couple et un embrayage de pontage.

Ces nouvelles transmissions complexes à cinq ou six vitesses se heurtent alors aux mêmes obstacles d'emcombrement, de poids et de prix que les précédentes à quatre vitesses, limitant leur emploi aux véhicules de haut de gamme à moteur en long et propulsion arrière. De plus, de sérieuses restrictions apparaissent dans la détermination de rapports convenablement espacés, nuisant à la qualité finale.

D'autres solutions ont parfois été proposées, mais généralement aussi complexes et présentant le plus souvent les mêmes inconvénients.

L'objet de la présente invention est ainsi une transmission automatique multivitesses, évitant les inconvénients des transmissions complexes et des autres solutions ci-dessus, c'est-à-dire une transmission automatique multivitesses à la fois compacte, se montant sans difficulté sur les véhicules à traction avant et moteur en travers, comprenant un nombre minimum d'éléments de friction, et offrant toujours des rapports judicieusement espacés, avec une grande facilité d'adaptation.

A cet effet, l'invention propose une transmission automatique multivitesses, notamment pour véhicule automobile, comportant, entre un arbre d'entrée et un arbre de sortie disposés dans un carter, un train planétaire à quatre éléments repérés d'un premier à un quatrième par ordre de vitesse, dit train planétaire double, concentrique à l'arbre de sortie, et au moins un chemin de puissance entre l'arbre d'entrée et le train planétaire double, et cinq organes de contrôle, à savoir trois embrayages et deux freins dont le serrage sélectif deux à deux détermine divers rapports de transmission entre l'arbre d'entrée et l'arbre de sortie, transmission caractérisée en ce qu'elle comporte deux chemins de puissance, un premier chemin de puissance présentant un premier rapport de vitesse fixé, et comportant le premier et le deuxième embrayages, et un deuxième chemin de puissance présentant un deuxième rapport de vitesse fixé supérieur au premier rapport et de même sens, et comportant le troisième embrayage, le premier élément du train planétaire double étant relié au premier chemin de puissance par le premier embrayage, le deuxième élément étant solidaire de l'arbre de sortie, le troisième élément étant relié au deuxième chemin de puissance par le troisième embrayage et immobilisé par le premier frein, et le quatrième élément étant relié au premier chemin de puissance par le deuxième embrayage et immobilisé par le deuxième frein, en sorte d'obtenir par serrage sélectif deux à deux des cinq organes de contrôle, six vitesses en marche avant : une première, par le premier embrayage et le premier frein ; une deuxième, par le premier embrayage et le deuxième frein ; une troisième, par les premier et deuxième embrayages ; une quatrième, par les premier et troisième embrayages ; une cinquième, par les deuxième et troisième embrayages ; une sixième, par le troisième embrayage et le deuxième frein ; un point mort freiné, par les premier et deuxième freins ; et une marche arrière, par le deuxième embrayage et le premier frein.

Le document de brevet US-A-3 577 804 (Kazuhiko Ohno) décrit une transmission automatique à quatre vitesses qui comporte, comme dans la présente invention, un train planétaire double en sortie, et cinq éléments de contrôle, trois embrayages et deux freins. L'arbre d'entrée est dédoublé pour permettre l'utilisation de deux chemins de puissance, un chemin hydraulique et un chemin mécanique, avec un convertisseur de couple hydraulique. Mais les rapports de vitesse des deux chemins de puissance sont les mêmes. Par contraste, les deux chemins de puissance de la transmission selon l'invention ont des rapports de vitesse différents, ce qui procure à la fois un accroissement de l'ouverture de transmission ou quotient du rapport supérieur par le rapport inférieur, et deux rapports de vitesse supplémentaires qui viennent parfaire l'échelonnement des rapports.

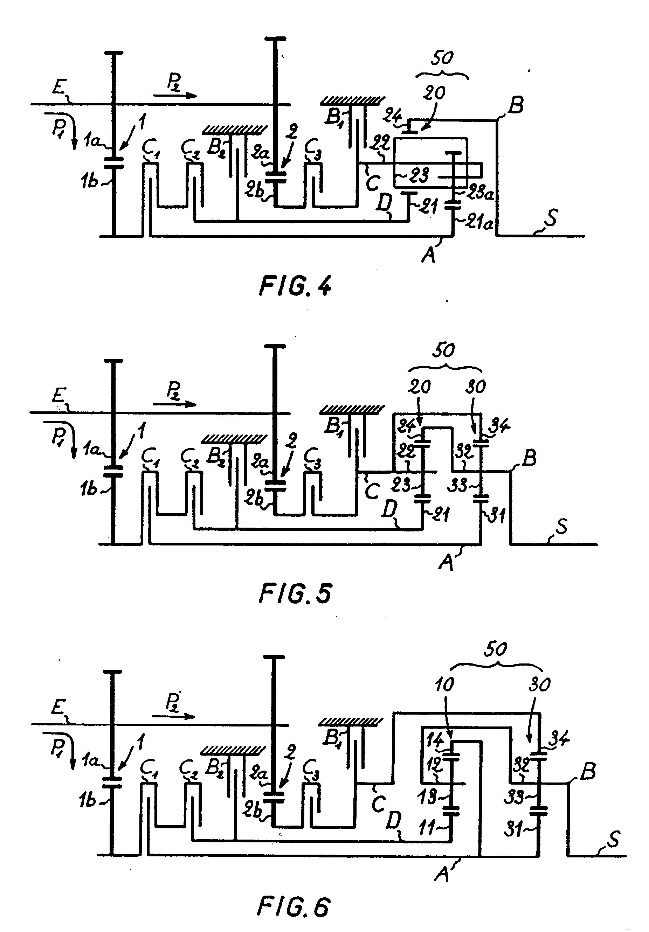

Le document EP-A-0 400 816, publié postérieurement à la date de priorité dont bénéficie la présente demande, et donc opposable seulement au titre de la nouveauté selon l'article 54.3 CBE, décrit, particulièrement en référence à la figure 4, une transmission qui comporte, avec un train planétaire à quatre éléments, six organes de friction, freins et embrayages, et deux chemins de puissance dont l'un est divisé en deux par l'intermédiaire d'un train inverseur, manoeuvré par l'un des organes de friction. Outre les particularités apportées par le train inverseur et son organe de friction, l'invention se distingue par l'organisation du train à quatre éléments, dont les troisième et quatrième éléments sont inversés, ce qui modifie de fond en comble l'échelonnement des rapports.

Avantageusement dans une transmission selon l'invention, suivant que les arbres d'entrée et de sortie sont parallèles et distants ou alignés, les rapports de vitesse fixés des deux chemins de puissance sont réalisés par deux trains d'engrenage parallèles à pignons toujours en prise, ou par un train planétaire à trois éléments ayant un élément solidaire du carter et une prise directe.

En vue d'associer à la boîte un organe à glissement, l'arbre d'entrée peut être dédoublé en un premier arbre formant entrée pour le premier chemin de puissance et relié à la turbine d'un convertisseur de couple hydraulique ou d'un coupleur sujet à glissement et en un deuxième arbre coaxial au premier formant entrée pour le deuxième chemin de puissance et relié à l'impulseur non sujet à glissement, en sorte que la marche arrière, la première, la deuxième et la troisième vitesses sont sujettes au glissement complet du convertisseur ou du coupleur, la quatrième et la cinquième vitesses sont sujettes à un glissement partiel, et la sixième vitesse est non sujette à glissement.

Par ailleurs, si on intercale entre les deux arbres d'entrée coaxiaux une roue libre telle que le premier arbre coaxial ne puisse pas tourner plus vite que le deuxième, la cinquième vitesse devient non sujette à glissement en traction, et la marche arrière, la première, la deuxième, la troisième et la quatrième vitesses deviennent non sujettes à glissement en frein moteur.

Les caractéristiques et avantages de l'invention ressortiront d'ailleurs de la description qui va suivre à titre d'exemple, en référence aux dessins annexés dans lesquels :

la figure 1 représente schématiquement une première forme de réalisation de l'invention, avec des arbres d'entrée et de sortie parallèles, et un premier type de train planétaire double ;
la figure 2 représente la grille de sélection des éléments de friction ;
la figure 3 représente schématiquement une deuxième forme de réalisation de l'invention, avec des arbres d'entrée et de sortie alignés, et un deuxième type de train planétaire double ;
la figure 4 représente une variante de la figure 1, avec le deuxième type de train planétaire double de la figure 2 ;
la figure 5 représente une variante de la figure 1, avec un troisième type de train planétaire double ;
la figure 6 représente une variante de la figure 1, avec un quatrième type de train planétaire double ;
la figure 7 représente schématiquement une transmission dérivée de la forme de réalisation de la figure 1, entraînée par un convertisseur de couple hydraulique, et montée décalée sur le côté d'un moteur transversal long ;
la figure 8 représente une variante de la figure 1, avec inversion du train planétaire double ;
la figure 9 représente une variante de la figure 4, avec inversion du train planétaire double ;
la figure 10 représente une variante de la figure 5, avec inversion du train planétaire double ;
la figure 11 représente une variante de la figure 6, avec inversion du train planétaire double ;
la figure 12 représente schématiquement une troisième forme de réalisation de l'invention à deux arbres d'entrée coaxiaux distincts, dérivant de la première forme de réalisation de la figure 1 ;
la figure 13 représente schématiquement une quatrième forme de réalisation de l'invention à deux arbres d'entrée coaxiaux distincts, dérivant de la deuxième forme de réalisation de la figure 3 ;
la figure 14 représente schématiquement une transmission dérivée de la forme de réalisation de la figure 13, entraînée par un convertisseur de couple hydraulique, et montée directement en bout sur un moteur transversal court ;
la figure 15 représente une variante de la figure 14, avec insertion d'une roue libre entre les deux arbres d'entrée coaxiaux distincts.

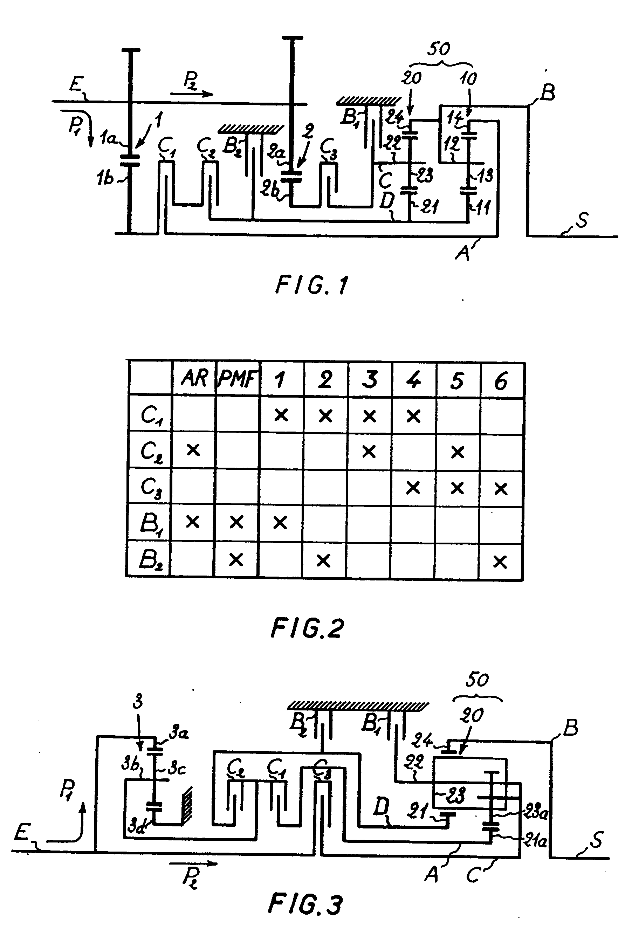

Dans la première forme de réalisation de la figure 1, une transmission selon l'invention comporte, dans un carter, un arbre d'entrée E et un arbre de sortie S parallèles.

Un premier train d'engrenages parallèles 1 à pignons toujours en prise comprenant un pignon $1\underline{a}$ solidaire de l'arbre d'entrée E et un pignon $1\underline{b}$ relié à un premier embrayage $C_1$ et à un deuxième embrayage $C_2$ concentriques à l'arbre de sortie S, forme un premier chemin de puissance $P_1$ présentant un premier rapport de vitesse fixé $G_1$.

Un deuxième train d'engrenages parallèles 2 à pignons toujours en prise comprenant un pignon $2\underline{a}$ solidaire de l'arbre d'entrée E et un pignon $2\underline{b}$ relié à un troisième embrayage $C_3$ concentrique à l'arbre de sortie S, forme un deuxième chemin de puissance $P_2$ présentant un deuxième rapport de vitesse fixé $G_2$.

Les rapports de vitesse fixés $G_1$ et $G_2$ sont de même sens, et les pignons $1\underline{a}$, $1\underline{b}$, $2\underline{a}$, $2\underline{b}$ sont choisis de manière que le rapport $G_2$ soit supérieur au rapport $G_1$.

Un train planétaire à quatre éléments référencés A, B, C, D dans l'ordre de leurs vitesses respectives, ou train planétaire double 50, comprend deux trains planétaires à trois éléments, ou trains de base 10, 20, le train de base 10 ayant un porte-satellites 12 portant des satellites 13 engrenant avec un planétaire 11 et avec une couronne 14, et le train de base 20 ayant un porte-satellites 22 portant des satellites 23 engrenant avec un planétaire 21 et avec une couronne 24. Le premier élément A est constitué de la couronne 14 du train 10, le deuxième élément B est constitué du porte-satellites 12 du train 10 et de la couronne 24 du train 20 solidaires en rotation, le troisième élément C est constitué du porte-satellites 22 du train 20, et le quatrième élément D est constitué des planétaires 11 et 21 des trains 10 et 20 solidaires en rotation.

Le premier élément A est associé au premier embrayage $C_1$, le deuxième élément B est solidaire de l'arbre de sortie S, le troisième élément C est associé au troisième embrayage $C_3$ et à un premier frein $B_1$, et le quatrième élément D est associé au deuxième embrayage $C_2$ et à un deuxième frein $B_2$.

Le fonctionnement est le suivant :

En première, le premier embrayage $C_1$ et le premier frein $B_1$ sont serrés. Le premier élément A est entraîné selon le rapport $G_1$ et le troisième élément C est immobilisé. La transmission s'effectue selon le rapport $G_1$ et le rapport de réduction inférieur du train planétaire double 50.

En deuxième, le premier embrayage $C_1$ et le deuxième frein $B_2$ sont serrés. Le premier élément A est entraîné selon le rapport $G_1$ et le quatrième élément D est immobilisé. La transmission s'effectue selon le rapport $G_1$ et le rapport de réduction intermédiaire du train planétaire double 50.

En troisième, les premier et deuxième embrayages $C_1$ et $C_2$ sont serrés. Les premier et quatrième éléments A et D et le train planétaire double 50 sont entraînés en bloc selon le rapport $G_1$. La transmission s'effectue simplement selon ce rapport $G_1$.

En quatrième, les premier et troisième embrayages $C_1$ et $C_3$ sont serrés. Le premier élément A est entraîné selon le rapport $G_1$ et le troisième élément C est entraîné selon le rapport $G_2$ supérieur à $G_1$. La transmission s'effectue selon un rapport intermédiaire entre $G_1$ et $G_2$.

En cinquième, les deuxième et troisième embrayages $C_2$ et $C_3$ sont serrés. Le troisième élément C est entraîné selon le rapport $G_2$ et le quatrième élément D est entraîné selon le rapport $G_1$ inférieur à $G_2$. La transmission s'effectue selon le rapport $G_2$ et un rapport de surmultiplication intermédiaire du train planétaire double 50.

En sixième, le troisième embrayage $C_3$ et le deuxième frein $B_2$ sont serrés. Le troisième élément C est entraîné selon le rapport $G_2$ et le quatrième élément D est immobilisé. La transmission s'effectue selon le rapport $G_2$ et le rapport de surmultiplication complet du train planétaire double 50.

Au point mort freiné, les premier et deuxième freins $B_1$ et $B_2$ sont serrés. Les troisième et quatrième éléments C et D et le train planétaire double 50 sont immobilisés en bloc. L'arbre de sortie S est immobilisé tandis que l'arbre d'entrée E est libre. Aucune transmission n'est effectuée.

En marche arrière, le deuxième embrayage $C_2$ et le premier frein $B_1$ sont serrés. Le quatrième élément D est entraîné selon le rapport $G_1$ et le troisième élément C est immobilisé. La transmission s'effectue selon le rapport $G_1$ et le rapport de marche arrière du train planétaire double 50.

La figure 2 représente la grille de sélection des éléments de friction correspondant à ces huit états de fonctionnement. On remarquera que ces huit états correspondent en fait aux dix combinaisons deux à deux des trois embrayages et des deux freins, moins les deux combinaisons interdites du troisième embrayage $C_3$ et du premier frein $B_1$ et du deuxième embrayage $C_2$ et du deuxième frein $B_2$ pour lesquelles l'arbre d'entrée E est immobilisé et l'arbre de sortie S est libre. On remarquera également que le passage de chaque état au suivant, ou de deux en deux, s'effectue d'un bout à l'autre en changeant un seul des deux éléments de friction mis en oeuvre, soit exclusivement par des changements comportant une transition simple, se prêtant parfaitement à toute forme de contrôle.

On se reportera maintenant à la figure 3, représentant schématiquement une deuxième forme de réalisation d'une transmission selon l'invention dans laquelle l'arbre d'entrée E et l'arbre de sortie S sont alignés. Tous les éléments communs aux figures 1 et 3 ou remplissant les mêmes fonctions portent les mêmes références.

Un train planétaire simple 3 comprenant une couronne 3a solidaire de l'arbre d'entrée E, un porte-satellites 3b relié au premier embrayage $C_1$ et au deuxième embrayage $C_2$, des satellites 3c, et un planétaire 3d solidaire du carter, forme le premier chemin de puissance $P_1$ présentant le premier rapport de vitesse fixé $G_1$ inférieur à l'unité.

L'arbre d'entrée E entraîne directement le troisième embrayage $C_3$ et forme le deuxième chemin de puissance $P_2$ réduit ainsi à une prise directe, le deuxième rapport de vitesse fixé $G_2$ étant égal à l'unité.

Le train planétaire double 50 à quatre éléments référencés A, B, C, D dans l'ordre de leurs vitesses respectives, est du type Ravigneaux et consiste dans le train planétaire de base 20 de la figure 1, dont le porte-satellites 22 porte des satellites supplémentaires 23a engrenant avec les satellites 23 et avec un planétaire supplémentaire 21a. Le premier élément A est constitué du planétaire supplémentaire 21a, le deuxième élément B est constitué de la couronne 24, le troisième élément C est constitué du porte-satellites 22, et le quatrième élément D est constitué du planétaire 21.

Les quatre éléments A, B, C, D sont associés aux trois embrayages et aux deux freins $C_1$, $C_2$, $C_3$, $B_1$, $B_2$ comme à la figure 1. La description du fonctionnement est la même et la grille de sélection de la figure 2 s'applique sans modification.

On se reportera maintenant aux figures 4, 5 et 6, qui représentent des variantes successives de la figure 1 avec différents types de train planétaire double 50. Tous les éléments communs avec la figure 1 ou remplissant les mêmes fonctions portent par ailleurs les mêmes références.

Sur la figure 4, le train planétaire double 50 est celui de la figure 3 du type Ravigneaux.

Sur la figure 5, le train planétaire double 50 comprend le train de base 20 de la figure 1, et un train de base 30 ayant un porte-satellites 32 portant des satellites 33 engrenant avec un planétaire 31 et avec une couronne 34. Le premier élément A est constitué du planétaire 31 du train 30, le deuxième élément B est constitué de la couronne 24 du train 20 et du porte-satellites 32 du train 30 solidaires en rotation, le troisième élément C est constitué du porte-satellites 22 du train 20 et de la couronne 34 du train 30 solidaires en rotation, et le quatrième élément D est constitué du planétaire 21 du train 20.

Sur la figure 6, le train planétaire double 50 comprend le train de base 10 de la figure 1 et le train de base 30 de la figure 5. Le premier élément A est constitué de la couronne 14 du train 10 et du planétaire 31 du train 30 solidaires en rotation, le deuxième élément B est constitué des porte-satellites 12 et 32 des trains 10 et 30 solidaires en rotation, le troisième élément C est constitué de la couronne 34 du train 30, et le quatrième élément D est constitué du planétaire 11 du train 10.

Sur toutes ces figures, les quatre éléments A, B, C, D restent associés aux trois embrayages et aux deux freins $C_1$, $C_2$, $C_3$, $B_1$, $B_2$ sans modification. La description du fonctionnement reste celle de la figure 1, et la grille de sélection des éléments de friction celle de la figure 2.

Les exemples 1 et 2 ci-dessous sont choisis de manière à procurer des rapports de transmission communs pour toutes les figures 1, 3, 4, 5 et 6, c'est-à-dire des rapports de transmission égaux -ou proportionnels dans le cas de la figure 3- présentant les mêmes raisons, à de très petits écarts près. Les trains Ravigneaux des figures 3 et 4 sont bien entendu les mêmes dans les deux exemples.

Exemple 1

Figures 1, 4, 5 et 6.

| Trains parallèles | | | Trains planétaires de base | | |
|---|---|---|---|---|---|
| **Train 1** | | | **Train 10** | | |
| Pignon 1a | : | 35 dents | Planétaire 11 | : | 50 dents |
| Pignon 1b | : | 43 dents | Couronne 14 | : | 88 dents |
| Rapport $G_1$ | : | 0,814 | Satellites 13 | : | 19 dents |
| **Train 2** | | | **Train 20** | | |
| Pignon 2a | : | 43 dents | Planétaire 21 | : | 41 dents |
| Pignon 2b | : | 35 dents | Couronne 24 | : | 85 dents |
| Rapport $G_2$ | : | 1,229 | Satellites 23 | : | 22 dents |
| | | | **Train 30** | | |
| | | | Planétaire 31 | : | 50 dents |
| | | | Couronne 34 | : | 88 dents |
| | | | Satellites 33 | : | 19 dents |
| | | | **Train Ravigneaux** | | |
| | | | Planétaire 21 | : | 41 dents |
| | | | Couronne 24 | : | 85 dents |
| | | | Satellites 23 | : | 22 dents |
| | | | Satellites 23a | : | 23 dents |
| | | | Planétaire 21a | : | 31 dents |

| Vitesses | Rapports de Transmission | Raisons |
|---|---|---|
| 1ère | 3,383 | |
| | | } 1,754 |
| 2ème | 1,928 | |
| | | } 1,569 |
| 3ème | 1,229 | |
| | | } 1,325 |
| 4ème | 0,927 | |
| | | } 1,325 |
| 5ème | 0,700 | |
| | | } 1,274 |
| 6ème | 0,549 | |
| Marche Arrière | 2,556 | |

EP 0 434 525 B1

Exemple 2

Figure 3.

| Train planétaire simple 3 | Train ravigneaux |
|---|---|
| Couronne 3a : 61 dents<br>Planétaire 3d : 31 dents<br>Satellites 3c : 15 dents<br>Rapport $G_1$ : 0,663 | Planétaire 21 : 41 dents<br>Couronne 24 : 85 dents<br>Satellites 23 : 22 dents<br>Satellites 23a : 23 dents<br>Planétaire 21a : 31 dents |

| Vitesses | Rapports de Transmission | Raisons |
|---|---|---|
| 1ère | 4,135 | |
| | | 1,750 |
| 2ème | 2,363 | |
| | | 1,567 |
| 3ème | 1,508 | |
| | | 1,323 |
| 4ème | 1,140 | |
| | | 1,325 |
| 5ème | 0,860 | |
| | | 1,275 |
| 6ème | 0,675 | |
| Marche Arrière | 3,127 | |

Ces rapports de transmission communs aux figures 1, 3, 4, 5 et 6 marquent une progression tout à fait favorable, et conviennent parfaitement à des versions de transmission à cinq ou à six vitesses, les versions à cinq vitesses étant obtenues par exemple en supprimant la première ou la sixième vitesse sur une version à six vitesses.

Partant de ces exemples, des modifications de pignonnerie permettraient d'obtenir facilement une grande diversité de nouveaux rapports marquant des progressions tout aussi favorables.

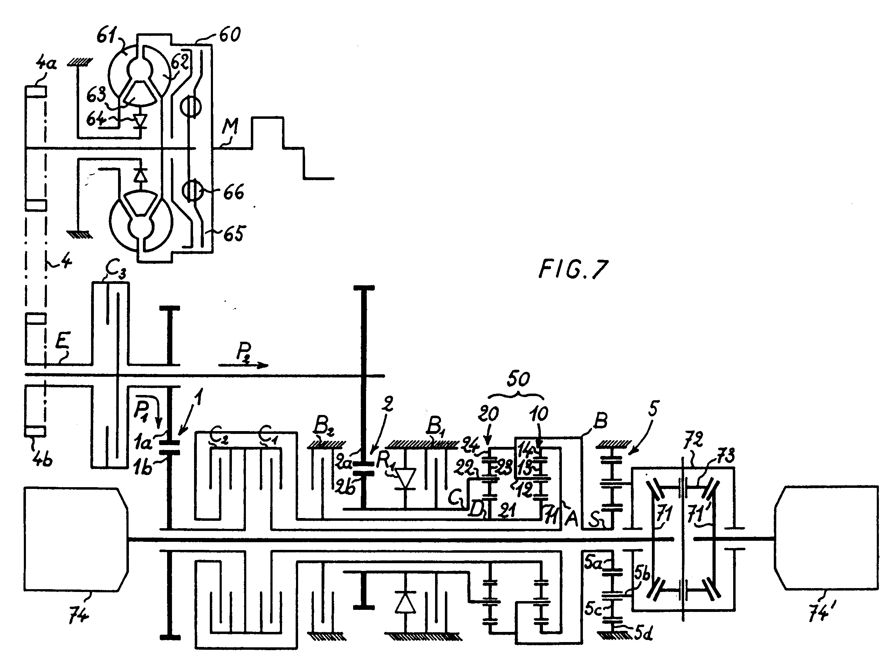

On se reportera maintenant à la figure 7, représentant schématiquement une transmission dérivée de la forme de réalisation de la figure 1, montée décalée sur le côté d'un moteur transversal long.

De manière classique, le vilebrequin du moteur M entraîne un convertisseur de couple hydraulique 60 comprenant un impulseur 61, une turbine 62, un réacteur 63, une roue libre 64, un embrayage de pontage 65, et un amortisseur de vibrations de torsion 66. La turbine 62 entraîne l'arbre d'entrée E de la transmission au moyen d'une chaîne de renvoi 4 portée par un pignon moteur 4a lié à la turbine 62 et par un pignon récepteur 4b solidaire de l'arbre d'entrée E.

Tous les éléments communs aux figures 1 et 7 ou remplissant les mêmes fonctions portent les mêmes références. A la différence de la figure 1, l'embrayage $C_3$ est monté sur l'arbre d'entrée E en amont du deuxième train d'engrenages parallèles 2 immédiatement à la suite du pignon récepteur 4b, sans que ceci modifie en rien le fonctionnement qui reste tel que décrit à la figure 1 ni la grille de sélection des éléments de friction qui reste celle de la figure 2. De même une roue libre $R_1$, ajoutée en parallèle avec le premier frein $B_1$ pour faciliter les passages de vitesse première/deuxième et deuxième/première d'une manière connue en soi, n'apporte

7

également aucune modification.

De manière classique, la transmission comporte également un train planétaire supplémentaire 5 comprenant un planétaire 5a solidaire de l'arbre de sortie S, un porte-satellites 5b solidaire d'un différentiel 72, des satellites 5c, et une couronne 5d solidaire du carter, procurant un rapport de réduction final. Le différentiel 72 comprend des satellites 73 engrenant avec des planétaires 71 et 71', entraînant les deux sorties latérales 74 et 74' vers les roues motrices.

Compte tenu du petit nombre de composants d'une telle transmission selon l'invention, on comprendra que la distance entre les deux sorties latérales 74 et 74' reste du même ordre que sur les transmissions automatiques existantes d'architecture analogue à quatre vitesses seulement.

Les exemples 3 et 4 ci-dessous s'appliquent bien entendu identiquement aux figures 1 et 7. Comme dans les exemples 1 et 2, les rapports de transmission restent exprimés entre l'arbre d'entrée E et l'arbre de sortie S, et ne comprennent ni le rapport de la chaîne de renvoi, ni le rapport de réduction final.

Exemple 3

Figures 1 et 7.

| Trains parallèles | | Trains planétaires de base | | |
|---|---|---|---|---|
| Train 1 | | Train 10 | | |
| Pignon 1a | : 33 dents | Planéraire 11 | : | 37 dents |
| Pignon 1b | : 49 dents | Couronne 14 | : | 77 dents |
| Rapport $G_1$ | : 0,673 | Satellites 13 | : | 20 dents |
| Train 2 | | Train 20 | | |
| Pignon 2a | : 45 dents | Planétaire 21 | : | 37 dents |
| Pignon 2b | : 37 dents | Couronne 24 | : | 77 dents |
| Rapport $G_2$ | : 1,216 | Satellites 23 | : | 20 dents |

| Vitesses | Rapports de Transmission | Raisons |
|---|---|---|
| 1ère | 3,683 | |
| 2ème | 2,198 | } 1,675 |
| 3ème | 1,485 | } 1,481 |
| 4ème | 1,003 | } 1,481 |
| 5ème | 0,677 | } 1,481 |
| 6ème | 0,555 | } 1,219 |
| Marche Arrière | 3,090 | |

Exemple 4

Figures 1 et 7.

| Trains parallèles | | Trains planétaires de base | | |
|---|---|---|---|---|
| **Train 1** | | | **Train 10** | |
| Pignon 1a | : 35 dents | Planétaire 11 | : | 37 dents |
| Pignon 1b | : 47 dents | Couronne 14 | : | 71 dents |
| Rapport $G_1$ | : 0,745 | Satellites 13 | : | 17 dents |
| **Train 2** | | | **Train 20** | |
| Pignon 2a | : 45 dents | Planétaire 21 | : | 37 dents |
| Pignon 2b | : 37 dents | Couronne 24 | : | 83 dents |
| Rapport $G_2$ | : 1,216 | Satellites 23 | : | 23 dents |

| Vitesses | Rapports de Transmission | Raisons |
|---|---|---|
| 1ère | 3,612 | |
| | | } 1,768 |
| 2ème | 2,043 | |
| | | } 1,521 |
| 3ème | 1,343 | |
| | | } 1,398 |
| 4ème | 0,961 | |
| | | } 1,370 |
| 5ème | 0,701 | |
| | | } 1,233 |
| 6ème | 0,569 | |
| Marche Arrière | 3,012 | |

Ces nouveaux rapports sont tout aussi favorables que ceux des exemples 1 et 2, et offrent des possibilités considérables pour des versions de transmission à cinq et à six vitesses. De plus, on peut déplacer la transmission le long de son axe et disposer les deux sorties latérales 74 et 74′ à égale distance des roues motrices, avec des demi-arbres de transmission égaux.

On appréciera que l'invention permet ainsi non seulement de monter des transmissions automatiques à cinq ou six vitesses parfaitement adaptées à la place des transmissions existantes d'architecture analogue à quatre vitesses seulement, mais encore de remédier à l'inconvénient habituel de ces transmissions qui est d'exiger un demi-arbre de transmission très court d'un côté, préjudiciable à la direction et à la suspension du véhicule.

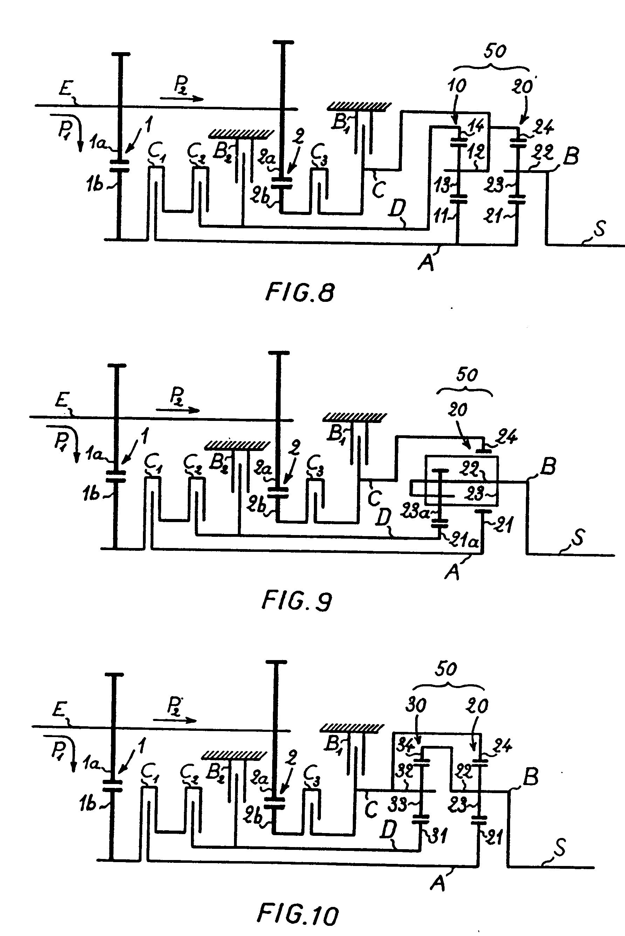

On se reportera maintenant à la figure 8, qui représente une variante de la figure 1 où le train planétaire double 50 est inversé.

On reconnaît à la figure 8 le train planétaire double 50 de la figure 1, comprenant les mêmes trains planétaires de base 10 et 20, unis par les planétaires 11 et 21 et par le porte-satellites 12 et la couronne 24 respectivement solidaires en rotation.

A la différence de la figure 1, le train planétaire double 50 est retourné bout pour bout, et les quatre éléments A, B, C, D sont permutés. Le quatrième élément D de la figure 1 est maintenant référencé premier élément A et est associé au premier embrayage $C_1$, le troisième élément C de la figure 1 est maintenant référencé deuxième élément B et est solidaire de l'arbre de sortie S, le deuxième élément B de la figure 1 est maintenant référencé troisième élément C et est associé au troisième embrayage $C_3$ et au premier frein $B_1$, et le premier élément A de la figure 1 est maintenant référencé quatrième élément D et est associé au deuxième embrayage $C_2$ et au deuxième frein $B_2$.

Ceci étant, la description du fonctionnement est la même qu'à la figure 1, et la grille de sélection des éléments de friction la même qu'à la figure 2, sans modification.

Les figures 9, 10 et 11 représentent successivement les mêmes variantes relativement aux figures 4, 5 et 6, que la figure 8 relativement à la figure 1. Sur toutes ces figures, le train planétaire double 50 est inversé à chaque fois de la même façon.

L'exemple 5 ci-dessous est choisi de manière à procurer des rapports de transmission communs à toutes ces variantes, présentant les mêmes raisons à de très petits écarts près. Cet exemple est à comparer à l'exemple 1. Toutes les pignonneries des trains planétaires de base restent bien entendu les mêmes, et seules celles des trains parallèles sont modifiées.

Exemple 5

Figures 8, 9, 10 et 11.
Même trains planétaires qu'à l'exemple 1 mais inversés.

| Trains parallèles | | Trains planétaires de base | | |
|---|---|---|---|---|
| Train 1 | | Train 10 | | |
| Pignon 1a | : 41 dents | Planétaire 11 | : | 50 dents |
| Pignon 1b | : 51 dents | Couronne 14 | : | 88 dents |
| Rapport $G_1$ | : 0,804 | Satellites 13 | : | 19 dents |
| Train 2 | | Train 20 | | |
| Pignon 2a | : 50 dents | Planétaire 21 | : | 41 dents |
| Pignon 2b | : 42 dents | Couronne 24 | : | 85 dents |
| Rapport $G_2$ | : 1,190 | Satellites 23 | : | 22 dents |
| | | Train 30 | | |
| | | Planétaire 31 | : | 50 dents |
| | | Couronne 34 | : | 88 dents |
| | | Satellites 33 | : | 19 dents |
| | | Train Ravigneaux | | |
| | | Planétaire 21 | : | 41 dents |
| | | Couronne 24 | : | 85 dents |
| | | Satellites 23 | : | 22 dents |
| | | Satellites 23a | : | 23 dents |
| | | Planétaire 21a | : | 31 dents |

| Vitesses | Rapports de Transmission | Raisons |
|----------|--------------------------|---------|
| 1ère | 3,830 | |
| 2ème | 2,184 | 1,754 |
| 3ème | 1,244 | 1,755 |
| 4ème | 0,939 | 1,325 |
| 5ème | 0,709 | 1,325 |
| 6ème | 0,535 | 1,325 |
| Marche Arrière | 2,179 | |

Ces nouveaux rapports de transmission communs aux figures 8, 9, 10 et 11 marquent une progression aussi favorable que celle de l'exemple 1 et conviennent aussi bien à des versions de transmissions à cinq ou à six vitesses. En outre on observera que trois raisons sur cinq, à savoir les raisons première/deuxième, troisième/quatrième, et quatrième/cinquième, sont inchangées.

Bien entendu, on pourrait inverser de même le train Ravigneaux de la figure 3, et modifier uniquement la pignonnerie du train planétaire simple 3 de manière à obtenir des rapports de transmission proportionnels aux rapports ci-dessus, avec les mêmes raisons. En outre, partant de ces nouveaux exemples, des modifications de pignonnerie permettraient d'obtenir facilement une grande diversité de nouveaux rapports, toujours disposés suivant des progressions très favorables.

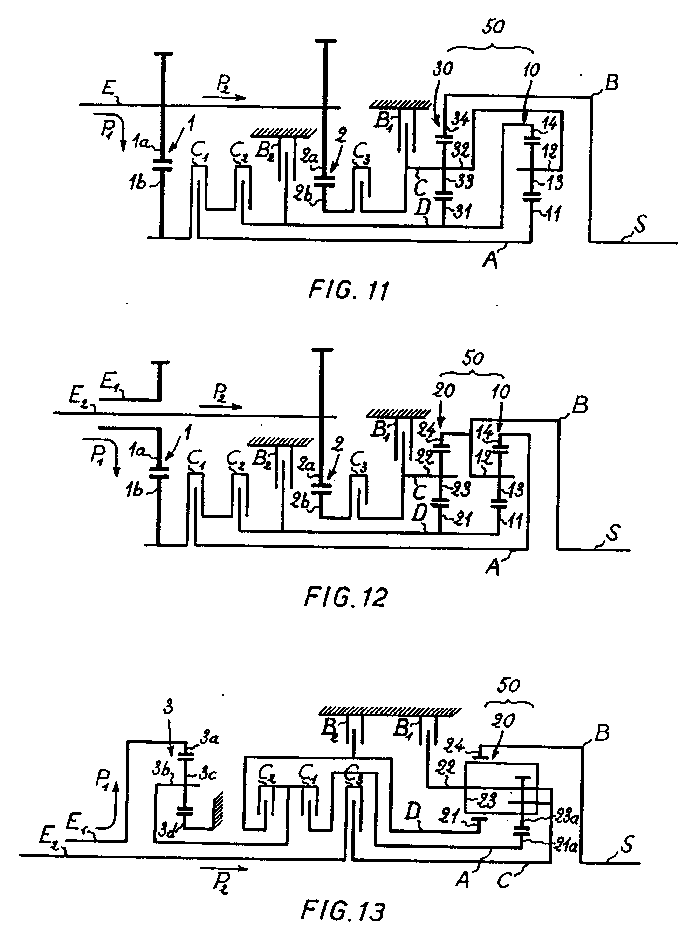

On se reportera maintenant à la figure 12, qui représente une troisième forme de réalisation de l'invention à deux arbres d'entrée coaxiaux distincts $E_1$, $E_2$, dérivant de la première forme de réalisation de la figure 1.

Tous les éléments communs aux figures 1 et 12 ou remplissant les mêmes fonctions portent les mêmes références. A la différence de la figure 1, l'arbre d'entrée E est dédoublé en un premier arbre coaxial $E_1$ portant le pignon 1a du premier train d'engrenages parallèles 1 et formant entrée pour le premier chemin de puissance $P_1$, et en un deuxième arbre coaxial $E_2$ portant le pignon 2a du deuxième train d'engrenages parallèles 2 et formant entrée pour le deuxième chemin de puissance $P_2$.

La figure 13 représente de même une quatrième forme de réalisation de l'invention à deux arbres d'entrée coaxiaux distincts $E_1$, $E_2$, dérivant de la deuxième forme de réalisation de la figure 3. Tous les éléments communs aux figures 3 et 13 ou remplissant les mêmes fonctions portent les mêmes références. A la différence de la figure 3, l'arbre d'entrée E est dédoublé en un premier arbre coaxial $E_1$ portant la couronne 3a du train planétaire simple 3 et formant entrée pour le premier chemin de puissance $P_1$, et en un deuxième arbre coaxial $E_2$ entraînant directement le troisième embrayage $C_3$ et s'identifiant au chemin de puissance $P_2$ en prise directe.

Dans l'une et l'autre forme de réalisation, les deux chemins de puissance $P_1$, $P_2$ peuvent être reliés à deux prises de mouvement différentes. La grille de sélection des éléments de friction de la figure 2 permet alors d'identifier immédiatement les combinaisons dépendant de l'une ou l'autre de ces deux prises de mouvement.

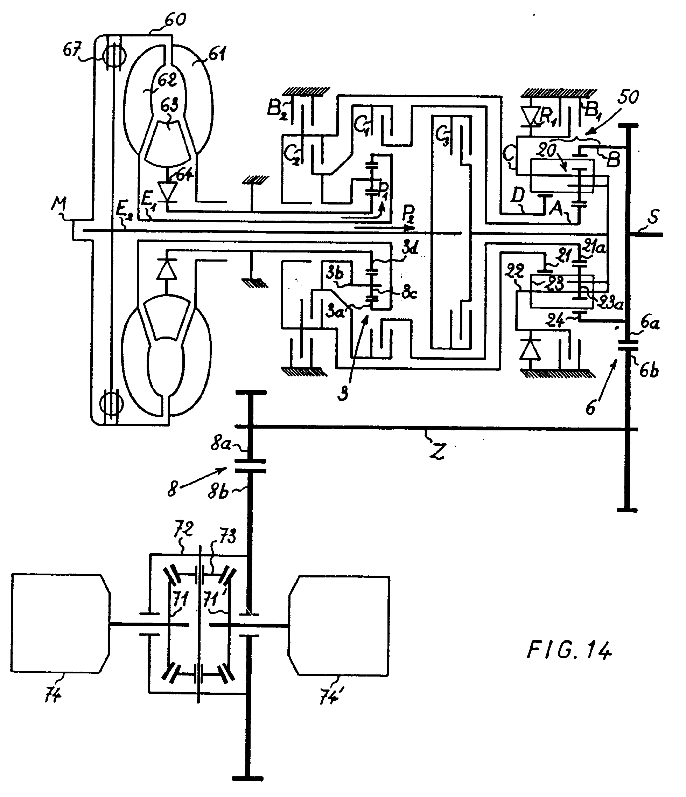

On se reportera à titre d'exemple à la figure 14, qui représente schématiquement une transmission dérivée de la forme de réalisation de la figure 13, entraînée par un convertisseur de couple hydraulique 60 à partir d'une prise de mouvement unique M, et montée directement en bout sur un moteur transversal court.

Tous les éléments communs aux figures 13 et 14 ou remplissant les mêmes fonctions portent les mêmes références. De manière classique, le convertisseur de couple 60 comprend un impulseur 61, une turbine 62, un réacteur 63, une roue libre 64, et un amortisseur de vibration de torsion 67. Le premier chemin de puissance $P_1$ est relié par le premier arbre d'entrée coaxial $E_1$ à la turbine 62 sujette à glissement et est dit hydraulique, et le deuxième chemin de puissance $P_2$ identifié au deuxième arbre d'entrée coaxial $E_2$ est relié par l'intermédiaire de l'amortisseur de vibrations de torsion 67 à l'impulseur 61 non sujet à glissement et est dit mécanique.

Avec une telle construction, la marche arrière, la première, la deuxième et la troisième vitesses sont hydrauliques et sujettes au glissement complet de la turbine, la quatrième et la cinquième vitesses sont mixtes et sujettes à un glissement partiel, et la sixième vitesse est mécanique et non sujette à glissement. Une roue libre $R_1$, ajoutée en parallèle avec le premier frein $B_1$ pour faciliter les passages de vitesse première/deuxième et deuxième/première d'une manière connue en soi, n'intervient en rien dans ce fonctionnement.

De manière classique, la transmission comporte également un train de renvoi à engrenages parallèles 6 comprenant un pignon 6a solidaire de l'arbre de sortie S et un pignon 6b solidaire d'un arbre intermédiaire Z, et un couple de sortie à engrenages parallèles 8 comprenant un pignon 8a solidaire de l'arbre intermédiaire Z et une roue 8b solidaire d'un différentiel 72, procurant ensemble un rapport de réduction final. Le différentiel 72 comprend des satellites 73 engrenant avec des planétaires 71 et 71', entraînant les deux sorties latérales 74 et 74' vers les roues motrices.

Compte tenu du petit nombre de composants, on comprendra qu'une telle transmission selon l'invention reste très courte, et puisse se monter directement en bout sur un moteur transversal court, à la place des transmissions automatiques compactes existantes à quatre vitesses seulement.

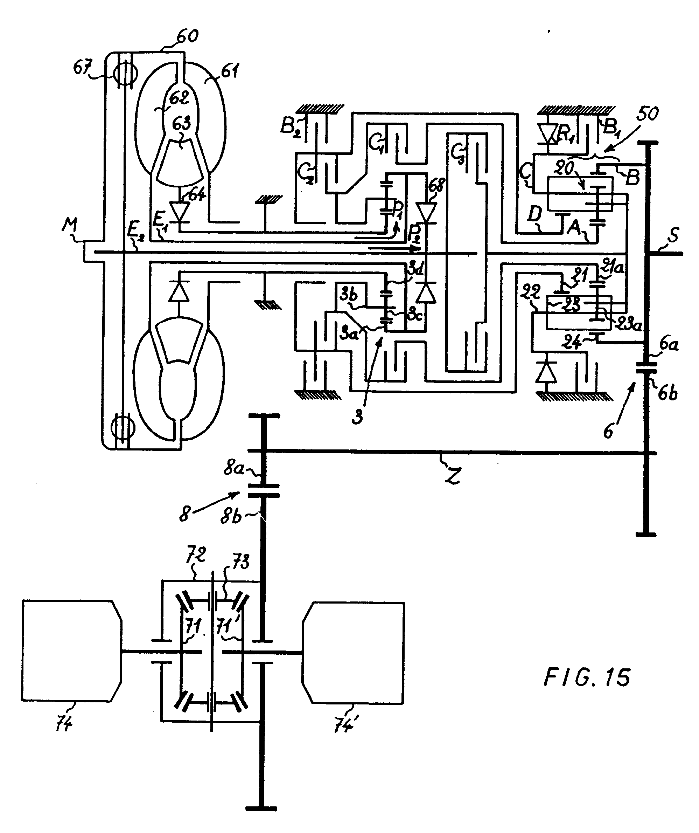

La figure 15 représente une variante de cette transmission dans laquelle une roue libre 68 est intercalée entre les deux arbres d'entrée coaxiaux $E_1$, $E_2$ de manière à interdire au premier arbre d'entrée coaxial $E_1$ de tourner plus vite que le deuxième arbre d'entrée coaxial $E_2$. Les vitesses sujettes à glissement sont alors sujettes à glissement uniquement en traction ou uniquement en frein moteur.

Le tableau 1, où l'astérisque * marque la venue en prise de la roue libre 68, récapitule la nature de chacune des vitesses ainsi obtenues :

## Tableau 1

| Vitesses | Traction | Frein moteur |
|---|---|---|
| 1ère | Hydraulique | Mécanique * |
| 2ème | Hydraulique | Mécanique * |
| 3ème | Hydraulique | Mécanique * |
| 4ème | Mixte | Mécanique * |
| 5ème | Mécanique * | Mixte |
| 6ème | Mécanique | Mécanique |
| Marche arrière | Hydraulique | Mécanique * |

On appréciera que le glissement du convertisseur 60 est partiellement éliminé en quatrième, et totalement éliminé en cinquième et en sixième et en frein moteur, où le glissement résiduel subsistant en cinquième est négligeable.

Les exemples 6 et 7 ci-dessous offrent deux nouvelles séries de rapports toujours très bien adaptés à des versions de transmission à cinq ou à six vitesses, et s'appliquent bien entendu identiquement aux figures 3, 13, 14 et 15. Comme dans les exemples précédents, les rapports de transmission restent exprimés entre l'arbre d'entrée E ou les arbres d'entrée $E_1$, $E_2$ et l'arbre de sortie S, et ne comprennent ni le glissement du convertisseur, ni le rapport de réduction final. En outre, pour faire ressortir le rôle des rapports $G_1$ et $G_2$ dans la facilité d'adaptation, on notera que l'exemple 7 ne diffère de l'exemple 6 que par modification du train planétaire simple 3, le train planétaire double 50 -ici du type Ravigneaux- étant inchangé.

Exemple 6

Figures 3, 13, 14 et 15.
Même train Ravigneaux qu'à l'exemple 7.

13

| Train planétaire simple 3 | Train ravigneaux |
|---|---|
| Couronne 3$\underline{a}$ : 75 dents | Planétaire 21 : 33 dents |
| Planétaire 3$\underline{d}$ : 45 dents | Couronne 24 : 75 dents |
| Satellites 3$\underline{c}$ : 15 dents | Satellites 23 : 21 dents |
| Rapport G$_1$ : 0,625 | Satellites 23$\underline{a}$ : 19 dents |
| | Planétaire 21$\underline{a}$ : 27 dents |

| Vitesses | Rapports de Transmission | Raisons |
|---|---|---|
| 1ère | 4,444 | |
| | | } 1,800 |
| 2ème | 2,469 | |
| | | } 1,543 |
| 3ème | 1,600 | |
| | | } 1,384 |
| 4ème | 1,156 | |
| | | } 1,347 |
| 5ème | 0,858 | |
| | | } 1,236 |
| 6ème | 0,694 | |
| Marche Arrière | 3,636 | |

Exemple 7

Figures 3, 13, 14 et 15.
Même train Ravigneaux qu'à l'exemple 6.

| Train planétaire simple 3 | Train ravigneaux |
|---|---|
| Couronne 3$\underline{a}$ : 65 dents | Planétaire 21 : 33 dents |
| Planétaire 3$\underline{d}$ : 31 dents | Couronne 24 : 75 dents |
| Satellites 3$\underline{c}$ : 17 dents | Satellites 23 : 21 dents |
| Rapport G$_1$ : 0,677 | Satellites 23$\underline{a}$ : 19 dents |
| | Planétaire 21$\underline{a}$ : 27 dents |

| Vitesses | Rapports de Transmission | Raisons |
|----------|--------------------------|---------|
| 1ère | 4,102 | |
| | | } 1,800 |
| 2ème | 2,279 | |
| | | } 1,543 |
| 3ème | 1,477 | |
| | | } 1,305 |
| 4ème | 1,132 | |
| | | } 1,292 |
| 5ème | 0,876 | |
| | | } 1,261 |
| 6ème | 0,694 | |
| Marche Arrière | 3,357 | |

Bien entendu, l'invention n'est pas limitée aux formes de réalisation décrites et représentées uniquement à titre d'exemple, mais embrasse toutes variantes. En particulier, on ne sortira ni du cadre ni de l'esprit de l'invention définie par ses revendications, en proposant toute autre organisation spécifique concernant les deux chemins de puissance $P_1$, $P_2$, les deux rapports de vitesse différents $G_1$, $G_2$, et/ou le train planétaire double 50.

**Revendications**

1. Transmission automatique multivitesses, notamment pour véhicule automobile, comportant, entre un arbre d'entrée (E) et un arbre de sortie (S) disposés dans un carter, un train planétaire à quatre éléments repérés d'un premier à un quatrième (A, B, C, D) par ordre de vitesse, dit train planétaire double (50), concentrique à l'arbre de sortie (S), et au moins un chemin de puissance ($P_1$, $P_2$) entre l'arbre d'entrée (E) et le train planétaire double (50), et cinq organes de contrôle, à savoir trois embrayages ($C_1$, $C_2$, $C_3$) et deux freins ($B_1$, $B_2$) dont le serrage sélectif deux à deux détermine divers rapports de transmission entre l'arbre d'entrée (E) et l'arbre de sortie (S), transmission caractérisée en ce qu'elle comporte deux chemins de puissance, un premier chemin de puissance ($P_1$) présentant un premier rapport de vitesse fixé ($G_1$), et comportant le premier et le deuxième embrayages ($C_1$, $C_2$), et un deuxième chemin de puissance ($P_2$) présentant un deuxième rapport de vitesse fixé ($G_2$) supérieur au premier rapport et de même sens, et comportant le troisième embrayage ($C_3$), le premier élément (A) du train planétaire double (50) étant relié au premier chemin de puissance ($P_1$) par le premier embrayage ($C_1$), le deuxième élément (B) étant solidaire de l'arbre de sortie (S), le troisième élément (C) étant relié au deuxième chemin de puissance ($P_2$) par le troisième embrayage ($C_3$) et immobilisé par le premier frein ($B_1$), et le quatrième élément (D) étant relié au premier chemin de puissance ($P_1$) par le deuxième embrayage ($C_2$) et immobilisé par le deuxième frein ($B_2$), en sorte d'obtenir par serrage sélectif deux à deux des cinq organes de contrôle, six vitesses en marche avant: une première, par le premier embrayage ($C_1$) et le premier frein ($B_1$) ; une deuxième, par le premier embrayage ($C_1$) et le deuxième frein ($B_2$) ; une troisième, par les premier et deuxième embrayages ($C_1$, $C_2$) ; une quatrième, par les premier et troisième embrayages ($C_1$, $C_3$) ; une cinquième, par les deuxième et troisième embrayages ($C_2$, $C_3$) ; une sixième, par le troisième embrayage ($C_3$) et le deuxième frein ($B_2$) ; un point mort freiné, par les premier et deuxième freins ($B_1$, $B_2$) ; et une marche arrière, par le deuxième embrayage ($C_2$) et le premier frein ($B_1$).

2. Transmission selon la revendication 1, caractérisée en ce que le train planétaire double (50) est constitué d'un ensemble de deux trains planétaires de base (10, 20, 30) à trois éléments, à savoir un porte-satellites (12, 22, 32) portant des satellites (13, 23, 33) engrenant avec un planétaire (11, 21, 31) et avec une couronne (14, 24, 34), l'ensemble déterminant les quatre éléments (A, B, C, D), dont deux sont constitués d'un seul élément d'un des deux trains de base, et les deux autres de deux éléments appartenant à l'un et à l'autre des deux trains de base, et respectivement solidaires en rotation.

3. Transmission selon la revendication 1, caractérisée en ce que le train planétaire double (50) est constitué d'un seul train planétaire de base (20) à trois éléments, à savoir un porte-satellites (22) portant des satellites (23) engrenant avec un planétaire (21) et avec une couronne (24), dont le porte-satellites (22) porte des satellites supplémentaires (23a) engrenant avec les satellites (23) et avec un planétaire supplémentaire (21a), l'ensemble déterminant les quatre éléments (A, B, C, D), dont trois sont les éléments du train de base, et un le planétaire supplémentaire.

4. Transmission selon une quelconque des revendications 1 à 3, caractérisée en ce que, les arbres d'entrée (E) et de sortie (S) étant parallèles, le premier chemin de puissance ($P_1$) et le deuxième chemin de puissance ($P_2$) comportent chacun un train d'engrenages parallèles (1), (2) à pignons toujours en prise, définissant respectivement le premier rapport de vitesse fixé ($G_1$) et le deuxième rapport de vitesse fixé ($G_2$) supérieur au premier ($G_1$).

5. Transmission selon une quelconque des revendications 1 à 3, caractérisée en ce que, les arbres d'entrée (E) et de sortie (S) étant alignés, le premier chemin de puissance ($P_1$) comporte un train planétaire (3) à trois éléments dont l'un est solidaire du carter, définissant le premier rapport de vitesse fixé ($G_1$) inférieur à l'unité, tandis que le deuxième chemin de puissance ($P_2$) est une prise directe définissant le deuxième rapport de vitesse fixé ($G_2$) égal à l'unité.

6. Transmission selon l'une quelconque des revendications 1 à 5, caractérisée en ce que l'arbre d'entrée (E) est dédoublé en un premier arbre d'entrée coaxial ($E_1$) et en un deuxième arbre d'entrée coaxial ($E_2$) formant respectivement entrée du premier chemin de puissance ($P_1$) et du deuxième chemin de puissance ($P_2$).

7. Transmission selon la revendication 6, reliée à une prise de mouvement unique (M) par l'intermédiaire d'un organe d'accouplement (60) à glissement, tel qu'un convertisseur de couple ou un coupleur hydraulique, ayant une partie menée susceptible de glissement par rapport à la partie menante, caractérisée en ce que le premier arbre d'entrée coaxial ($E_1$) est relié à ladite partie menée tandis que le deuxième arbre d'entrée coaxial ($E_2$) est relié à ladite partie menante.

8. Transmission selon la revendication 7, caractérisée en ce qu'elle comporte en outre une roue libre (68) intercalée entre les premier et deuxième arbres d'entrée coaxiaux ($E_1$, $E_2$), dans un sens tel que le premier arbre d'entrée coaxial ($E_1$) ne puisse pas tourner plus vite que le deuxième arbre d'entrée coaxial ($E_2$).

9. Transmission selon la revendication 2, caractérisée en ce que, dans le train planétaire double (50), le premier élément (A) est constitué de la couronne (14) d'un premier train de base (10), le deuxième élément (B) est constitué du porte-satellites (12) du premier train de base (10) et de la couronne (24) d'un deuxième train de base (20) solidaires en rotation, le troisième élément (C) est constitué du porte-satellites (22) du deuxième train, et le quatrième élément (D) est constitué des planétaires (11, 21) des premier et deuxième trains solidaires en rotation.

10. Transmission selon la revendication 2, caractérisée en ce que, dans le train planétaire double (50), le premier élément (A) est constitué du planétaire (21, 31) d'un premier train de base (20, 30), le deuxième élément (B) est constitué du porte-satellites (22, 32) du premier train de base (20, 30) et de la couronne (34, 24) d'un deuxième train de base (30, 20) solidaires en rotation, le troisième élément (C) est constitué de la couronne (24, 34) du premier train et du porte-satellites (32, 22) du deuxième train solidaires en rotation, et le quatrième élément (D) est constitué du planétaire (31, 21) du deuxième train.

11. Transmission selon la revendication 2, caractérisée en ce que, dans le train planétaire double (50), le premier élément (A) est constitué de la couronne (14) d'un premier train de base (10) et du planétaire (31) d'un deuxième train de base (30) solidaires en rotation, le deuxième élément (B) est constitué des porte-satellites (12, 32) des premier et deuxième trains solidaires en rotation, le troisième élément (C) est constitué de la couronne (34) du deuxième train, et le quatrième élément (D) est constitué du planétaire (11) du premier train.

12. Transmission automatique selon la revendication 2, caractérisée en ce que, dans le train double (50), le premier élément (A) est constitué des planétaires (11, 21) d'un premier train de base (10) et d'un deuxième train de base (20) solidaires en rotation, le deuxième élément (B) est constitué du porte-satellites (22) du deuxième train, le troisième élément (C) est constitué du porte-satellites (12) du premier train et de la couronne (24) du deuxième train solidaires en rotation, et le quatrième élément (D) est constitué de la couronne (14) du premier train.

13. Transmission selon la revendication 2, caractérisée en ce que, dans le train planétaire double (50), le premier élément (A) est constitué du planétaire (11) d'un premier train de base (10), le deuxième élément (B) est constitué de la couronne (34) d'un deuxième train de base (30), le troisième élément (C) est constitué des porte-satellites (12, 32) des premier et deuxième trains solidaires en rotation, et le quatrième élément (D) est constitué de la couronne (14) du premier train et du planétaire (31) du deuxième train solidaires en rotation.

14. Transmission selon la revendication 3, caractérisée en ce que, dans le train planétaire double (50), le premier élément (A) est constitué du planétaire supplémentaire (21a), le deuxième élément (B) est constitué de la couronne (24), le troisième élément (C) est constitué du porte-satellites (22), et le quatrième élément (D) est constitué du planétaire (21).

15. Transmission selon la revendication 3, caractérisée en ce que, dans le train planétaire double (50), le premier élément (A) est constitué du planétaire (21), le deuxième élément (B) est constitué du porte-satellites (22), le troisième élément (C) est constitué de la couronne (24), et le quatrième élément (D) est constitué du planétaire supplémentaire (21a).

## Patentansprüche

1. Automatisches Mehrganggetriebe, insbesondere für Kraftfahrzeug, bestehend aus zwischen einer Antriebswelle (E) und einer Abtriebswelle (S), die in einem Gehäuse angeordnet sind, einem mit der Abtriebswelle (S) konzentrischen Planetensatz aus vier in Drehzahlordnung von einem ersten bis zu einem vierten mit (A,B,C,D) bezeichneten Elementen, sogenannter doppelter Planetensatz (50), und mindestens einem Leistungsweg ($P_1$, $P_2$) zwischen der Antriebswelle (E) und dem doppelten Planetensatz (50), sowie fünf Schaltelementen, nämlich drei Kupplungen ($C_1$, $C_2$, $C_3$) und zwei Bremsen ($B_1$, $B_2$), deren selektives paarweises Eingreifen verschiedene Übersetzungsverhältnisse zwischen der Antriebswelle (E) und der Abtriebswelle (S) bewirkt, dadurch gekennzeichnet, dass das Getriebe zwei Leistungswege aufweist, nämlich einen ersten Leistungsweg ($P_1$) der ein erstes festes Übersetzungsverhältnis ($G_1$) aufweist und die erste und die zweite Kupplung ($C_1$, $C_2$) enthält, sowie einen zweiten Leistungsweg ($P_2$) mit einem gegenüber dem ersten höheren festen Übersetzungsverhältnis ($G_2$) in gleicher Drehrichtung, welcher die dritte Kupplung ($C_3$) enthält, wobei das erste Element (A) des doppelten Planetensatzes (50) mit dem ersten Leistungsweg ($P_1$) durch die erste Kupplung ($C_1$) verbunden wird, während das zweite Element (B) mit der Abtriebswelle (S) fest verbunden ist und das dritte Element (C) mit dem zweiten Leistungsweg ($P_2$) durch die dritte Kupplung ($C_3$) verbunden und durch die erste Bremse ($B_1$) arretiert wird und das vierte Element (D) mit dem ersten Leistungsweg ($P_1$) durch die zweite Kupplung ($C_2$) verbunden und durch die zweite Bremse ($B_2$) arretiert wird, so dass durch das selektive, jeweils paarweise Eingreifen der fünf Schaltelemente erzielt werden: sechs Vorwärtsgänge, nämlich ein erster mit der ersten Kupplung ($C_1$) und der ersten Bremse ($B_1$), ein zweiter mit der ersten Kupplung ($C_1$) und der zweiten Bremse ($B_2$), ein dritter mit der ersten und der zweiten Kupplung ($C_1$, $C_2$), ein vierter mit der ersten und der dritten Kupplung ($C_1$, $C_3$), ein fünfter mit der zweiten und der dritten Kupplung ($C_2$, $C_3$) und ein sechster mit der dritten Kupplung ($C_3$) und der zweiten Bremse ($B_2$), eine gebremste Neutralstellung mit der ersten und der zweiten Bremse ($B_1$, $B_2$) und ein Rückwärtsgang mit der zweiten Kupplung ($C_2$) und der ersten Bremse (B1).

2. Getriebe gemäss Anspruch 1, dadurch gekennzeichnet, dass der doppelte Planetensatz (50) aus einer Verbindung zweier Grundplanetensätze (10, 20, 30) mit je drei Elementen besteht, nämlich einem Planetenträger (12, 22, 32), der Planetenräder (13, 23, 33) trägt, die in ein Sonnenrad (11, 21, 31) und in ein Ringrad (14, 24, 34) eingreifen, wobei diese Anordnung die vier Elemente (A, B, C, D) bestimmt, von welchen zwei aus je einem Element des Grundplanetensatzes bestehen und die beiden anderen aus je zwei, miteinander fest verbunden rotierenden Elementen, von denen jeweils eines dem einen und eines dem anderen Grundplanetensatz angehört.

3. Getriebe gemäss Anspruch 1, dadurch gekennzeichnet, dass der doppelte Planetensatz (50) aus nur einem Grundplanetensatz (20) mit drei Elementen besteht, nämlich einem Planetenträger (22), der Planetenräder (23) trägt, die in ein Sonnenrad (21) und in ein Ringrad (24) eingreifen, wobei der Planetenträger (22) zusätzliche Planetenräder (23a) trägt, die in die Planetenräder (23) und in ein zusätzliches Sonnenrad (21 a) eingreifen, wobei diese Anordnung die vier Elemente (A, B, C, D) bestimmt, von welchen drei je ein Element des Grundplanetensatzes sind und eines das zusätzliche Sonnenrad (21a).

4. Getriebe gemäss einem der Ansprüche 1 bis 3, dadurch gekennzeichnet, dass bei parallel angeordneter Antriebs- (E) und Abtriebswelle (S) der erste Leistungsweg ($P_1$) und der zweite Leistungsweg ($P_2$) je ein paralleles Vorgelege (1, 2) enthalten, deren Zahnräder immer im Eingriff stehen und die jeweils das erste feste Übersetzungsverhältnis ($G_1$) und das gegenüber diesem höhere zweite feste Übersetzungsverhältnis ($G_2$) bestimmen.

5. Getriebe gemäss einem der Ansprüche 1 bis 3, dadurch gekennzeichnet, dass bei in Linie angeordneter Antriebs- (E) und Abtriebswelle (S) der erste Leistungsweg ($P_1$) einen Planetensatz (3) mit drei Elementen, von denen eines mit dem Gehäuse fest verbunden ist, enthält, der das erste feste Übersetzungsverhältnis ($G_1$) bestimmt, das kleiner als 1 ist, während der zweite Leistungsweg ($P_2$) ein direkter Antrieb ist, der das zweite feste Übersetzungsverhältnis ($G_2$) bestimmt, welches gleich 1 ist.

6. Getriebe gemäss einem der Ansprüche 1 bis 5, dadurch gekennzeichnet, dass die Antriebswelle (E) verdoppelt ist und aus einer ersten koaxialen Antriebswelle ($E_1$) und einer zweiten koaxialen Antriebswelle ($E_2$) besteht, die jeweils den Antrieb des ersten Leistungswegs ($P_1$) und des zweiten Leistungswegs ($P_2$) bilden.

7. Getriebe gemäss Anspruch 6, verbunden mit einem einzigen Bewegungsabgriff (M) über ein Kupplungsorgan (60) mit Schlupfwirkung, wie z. B. einen hydraulischen Drehmomentwandler oder eine Strömungskupplung, welches ein mit dem antreibenden Teil durch eine schlüpfende Verbindung angetriebenes Teil besitzt, dadurch gekennzeichnet, dass die erste koaxiale Antriebswelle ($E_1$) mit diesem angetriebenen Teil verbunden ist, während die zweite koaxiale Antriebswelle ($E_2$) mit dem antreibenden Teil verbunden ist.

8. Getriebe gemäss Anspruch 7, dadurch gekennzeichnet, dass es zusätzlich einen zwischen der ersten und der zweiten koaxialen Antriebswelle ($E_1$, $E_2$) so angeordneten Freilauf (68) enthält, dass die erste koaxiale Antriebswelle ($E_1$) nicht schneller rotieren kann als die zweite koaxiale Antriebswelle (E2)

9. Getriebe gemäss Anspruch 2, dadurch gekennzeichnet, dass in dem doppelten Planetensatz (50) das erste Element (A) aus dem Ringrad (14) eines ersten Grundplanetensatzes (10) besteht, das zweite Element (B) aus dem Planetenträger (12) des ersten Grundplanetensatzes (10) und dem mit ihm fest verbunden rotierenden Ringrad (24) eines zweiten Grundplane-tensatzes (20), das dritte Element (C) aus dem Planetenträger (22) des zweiten Satzes und das vierte Element (D) aus den fest verbunden rotierenden Sonnenrädern (11, 21) des ersten und zweiten Satzes.

10. Getriebe gemäss Anspruch 2, dadurch gekennzeichnet, dass in dem doppelten Planetensatz (50) das erste Element (A) aus dem Sonnenrad (21, 31) eines ersten Grundplanetensatzes (20, 30) besteht, das zweite Element (B) aus dem Planetenträger (22, 32) des ersten Grundplanetensatzes (20, 30) und dem mit ihm fest verbunden rotierenden Ringrad (34, 24) eines zweiten Grundplanetensatzes (30, 20), das dritte Element (C) aus dem Ringrad (24, 34) des ersten Satzes und dem mit ihm fest verbunden rotierenden Planetenträger (32, 22) des zweiten Satzes und das vierte Element (D) aus dem Sonnenrad (31, 21) des zweiten Satzes.

11. Getriebe gemäss Anspruch 2, dadurch gekennzeichnet, dass in dem doppelten Planetensatz (50) das erste Element (A) aus dem Ringrad (14) eines ersten Grundplanetensatzes (10) und dem mit ihm fest verbunden rotierenden Sonnenrad (31) eines zweiten Grundplanetensatzes (30) besteht, das zweite Element (B) aus den fest verbunden rotierenden Planetenträgern (12, 32) des ersten und zweiten Satzes, das dritte Element (C) aus dem Ringrad (34) des zweiten Satzes und das vierte Element (D) aus dem Sonnenrad (11) des ersten Satzes.

12. Automatikgetriebe gemäss Anspruch 2, dadurch gekennzeichnet, dass in dem doppelten Planetensatz (50) das erste Element (A) aus den fest verbunden rotierenden Sonnenrädern (11, 21) eines ersten Grundplanetensatzes (10) und eines zweiten Grundplanetensatzes (20) besteht, das zweite Element (B) aus dem Planetenträger (22) des zweiten Satzes, das dritte Element (C) aus dem Planetenträger (12) des ersten Satzes und dem mit ihm fest verbunden rotierenden Ringrad (24) des zweiten Satzes und das vierte Element (D) aus dem Ringrad (14) des ersten Satzes.

13. Getriebe gemäss Anspruch 2, dadurch gekennzeichnet, dass in dem doppelten Planetensatz (50) das erste Element (A) aus dem Sonnenrad (11) eines ersten Grundplanetensatzes (10) besteht, das zweite Element (B) aus dem Ringrad (34) eines zweiten Grundplanetensatzes (30), das dritte Element (C) aus den fest verbunden rotierenden Planetenträgern (12, 32) des ersten und zweiten Satzes und das vierte Element (D) aus dem Ringrad (14) des ersten Satzes und dem mit ihm fest verbunden rotierenden Sonnenrad (31) des zweiten Satzes.

14. Getriebe gemäss Anspruch 3, dadurch gekennzeichnet, dass in dem doppelten Planetensatz (50) das erste Element (A) aus dem zusätzlichen Sonnenrad (21a) besteht, das zweite Element (B) aus dem Ringrad (24), das dritte Element (C) aus dem Planetenträger (22) und das vierte Element (D) aus dem Sonnenrad (21).

15. Getriebe gemäss Anspruch 3, dadurch gekennzeichnet, dass in dem doppelten Planetensatz (50) das erste Element (A) aus dem Sonnenrad (21) besteht, das zweite Element (B) aus dem Planetenträger (22), das dritte Element (C) aus dem Ringrad (24) und das vierte Element (D) aus dem zusätzlichen Sonnenrad (21a).

## Claims

1. Multispeed automatic transmission, notably for motor vehicles, including, between an input shaft (E) and an output shaft (S) disposed in a casing, a planetary train with four components referred to as first to fourth (A, B, C, D) in order of speed, termed a double planetary train (50), concentric with the output shaft (S), and at least one power path ($P_1$, $P_2$) between the input shaft (E) and the double planetary train (50), and five control devices, namely three clutches ($C_1$, $C_2$, $C_3$) and two brakes ($B_1$, $B_2$), the selective application of which in pairs determines various transmission ratios between the input shaft (E) and the output shaft (S), a transmission characterised in that it includes two power paths, a first power path ($P_1$) having a first fixed speed ratio ($G_1$) and including the first and second clutches ($C_1$, $C_2$), and a second power path ($P_2$) having a second fixed speed ratio ($G_2$) higher than the first ratio and in the same direction, and including the third clutch ($C_3$), the first component (A) of the double planetary train (50) being coupled to the first power path ($P_1$) by the first clutch ($C_1$), the second component (B) being fixed to the output shaft (S), the third component (C) being coupled to the second power path ($P_2$) by the third clutch ($C_3$) and immobilised by the first brake ($B_1$), and the fourth component (D) being coupled to the first power path ($P_1$) by the second clutch ($C_2$) and immobilised by the second brake ($B_2$), so as to obtain, by the selective application of the five control devices in pairs, six forward speeds: a first one, by the first clutch ($C_1$) and the first brake ($B_1$); a second, by the first clutch ($C_1$) and the second brake ($B_2$); a third, by the first and second clutches ($C_1$, $C_2$); a fourth, by the first and third clutches ($C_1$, $C_3$); a fifth, by the second and third clutches ($C_2$, $C_3$); a sixth, by the third clutch ($C_3$) and the second brake ($B_2$); a braked neutral position, by the first and second brakes ($B_1$, $B_2$); and a reverse gear, by the second clutch ($C_2$) and the first brake ($B_1$).

2. Transmission according to Claim 1, characterised in that the double planetary train (50) consists of a set of two basic planetary trains (10, 20, 30) with three components, namely a planet carrier (12, 22, 32) carrying planet gears (13, 23, 33) meshing with a sun gear (11, 21, 31) and with an annular gear (14, 24, 34), the whole determining the four components (A. B. C. D), two of which consist of a single component of one of the two basic trains, and the other two of two components belonging to each of the two basic trains, and respectively fixed to each other with respect to rotation.

3. Transmission according to Claim 1, characterised in that the double planetary train (50) consists of a single basic planetary train (20) with three components, namely a planet carrier (22) carrying planet gears (23) meshing with a sun gear (21) and with an annular gear (24), wherein the planet carrier (22) carries additional planet gears (23a) meshing with the planet gears (23) and with an additional sun gear (21a), the whole determining the four components (A, B, C, D), three of which are the components of the basic train, and one the additional sun gear.

4. Transmission according to any one of Claims 1 to 3, characterised in that, the input (E) and output (S) shafts being parallel, the first power path $(P_1)$ and the second power path $(P_2)$ each include a parallel gear train (1), (2) with pinions in continuous engagement, defining respectively the first fixed speed ratio $(G_1)$ and the second fixed speed ratio $(G_2)$ higher than the first $(G_1)$.

5. Transmission according to any one of Claims 1 to 3, characterised in that, the input (E) and output (S) shafts being aligned, the first power path $(P_1)$ includes a planetary train (3) with three components, one of which is fixed to the casing, defining the first fixed speed ratio $(G_1)$ lower than unity, whilst the second power path $(P_2)$ is a direct drive defining the second fixed speed ratio $(G_2)$ equal to unity.

6. Transmission according to any one of Claims 1 to 5, characterised in that the input shaft (E) is duplicated by providing a first coaxial input shaft $(E_1)$ and a second coaxial input shaft $(E_2)$ forming respectively an input for the first power path $(P_1)$ and for the second power path $(P_2)$.

7. Transmission according to Claim 6, connected to a single power source (M) through a slipping coupling device (60), such as a torque converter or a hydraulic coupling, having a driven part subject to slip with respect to the driving part, characterised in that the first coaxial input shaft $(E_1)$ is coupled to the said driven part whilst the second coaxial input shaft $(E_2)$ is coupled to the said driving part.

8. Transmission according to Claim 7, characterised in that it also includes a free wheel (68) interposed between the first and second coaxial input shafts $(E_1, E_2)$, in a direction such that the first coaxial input shaft $(E_1)$ is not able to rotate faster than the second coaxial input shaft $(E_2)$.

9. Transmission according to Claim 2, characterised in that, in the double planetary train (50), the first component (A) consists of the annular gear (14) of a first basic train (10), the second component (B) consists of the planet carrier (12) of the first basic train (10) and the annular gear (24) of a second basic train (20) fixed to each other with respect to rotation, the third component (C) consists of the planet carrier (22) of the second train, and the fourth component (D) consists of the sun gears (11, 21) of the first and second trains fixed to each other with respect to rotation.

10. Transmission according to Claim 2, characterised in that, in the double planetary train (50), the first component (A) consists of the sun gear (21, 31) of a first basic train (20, 30), the second component (B) consists of the planet carrier (22, 32) of the first basic train (20, 30) and the annular gear (34, 24) of a second basic train (30, 20) fixed to each other with respect to rotation, the third component (C) consists of the annular gear (24, 34) of the first train and the planet carrier (32, 22) of the second train fixed to each other with respect to rotation, and the fourth component (D) consists of the sun gear (31, 21) of the second train.

11. Transmission according to Claim 2, characterised in that, in the double planetary train (50), the first component (A) consists of the annular gear (14) of a first basic train (10) and the sun gear (31) of a second basic train (30) fixed to each other with respect to rotation, the second component (B) consists of the planet carriers (12, 32) of the first and second trains fixed to each other with respect to rotation, the third component (C) consists of the annular gear (34) of the second train, and the fourth component (D) consists of the sun gear (11) of the first train.

12. Automatic transmission according to Claim 2, characterised in that, in the double train (50), the first component (A) consists of the sun gears (11, 21) of a first basic train (10) and of a second basic train (20) fixed to each other with respect to rotation, the second component (B) consists of the planet carrier (22) of the second train, the third component (C) consists of the planet carrier (12) of the first train and the annular gear (24) of the second train fixed to each other with respect to rotation, and the fourth component (D) consists of the annular gear (14) of the first train.

13. Transmission according to Claim 2, characterised in that, in the double planetary train (50), the first component (A) consists of the sun gear (11) of a first basic train (10), the second component (B) consists of the annular gear (34) of a second basic train (30), the third component (C) consists of the planet carriers (12, 32) of the first and second trains fixed to each other with respect to rotation, and the fourth component (D) consists of the annular gear (14) of the first train and the sun gear (31) of the second train fixed to each other with respect to rotation.

14. Transmission according to Claim 3, characterised in that, in the double planetary train (50), the first component (A) consists of the additional sun gear (21a), the second component (B) consists of the annular gear (24), the third component (C) consists of the planet carrier (22), and the fourth component (D) consists of the sun gear (21).

15. Transmission according to Claim 3, characterised in that, in the double planetary train (50), the first component (A) consists of the sun gear (21), the second component (B) consists of the planet carrier (22), the third component (C) consists of the annular gear (24), and the fourth component (D) consists of the additional sun gear (21a).

FIG.1

FIG.2

FIG.3

FIG. 4

FIG. 5

FIG. 6

FIG.7

EP 0 434 525 B1

EP 0 434 525 B1

FIG.8

FIG.9

FIG.10

25

FIG. 11

FIG. 12

FIG. 13

FIG. 14

FIG.15